# EUROPEAN PATENT SPECIFICATION

(11) **EP 4 050 237 B1**
(45) Date of publication and mention of the grant of the patent: **03.07.2024**
(21) Application number: 21158962.7
(22) Date of filing: 24.02.2021
(51) Int. Cl.: F16H 21/50, F16H 23/06, F16H 23/08

(54) **DRIVE UNIT AND PERSONAL CARE DEVICE WITH A DRIVE UNIT**
ANTRIEBSEINHEIT UND KÖRPERPFLEGEGERÄT MIT EINER ANTRIEBSEINHEIT
UNITÉ D'ENTRAÎNEMENT ET DISPOSITIF DE SOINS PERSONNELS COMPORTANT UNE UNITÉ D'ENTRAÎNEMENT

(43) Date of publication of application: 31.08.2022
(73) Proprietor: Braun GmbH, 61476 Kronberg im Taunus (DE)
(72) Inventor: ALTMANN, Niclas, 61476 Kronberg (DE)
(74) Representative: P&G Patent Germany

(56) References cited:
- EP-A2- 0 510 940
- ES-T3- 2 311 065
- US-A- 4 367 658
- US-A- 4 649 762
- US-A- 5 974 615
- US-B1- 6 401 288

## Description

### FIELD OF THE INVENTION

The present invention is concerned with a drive unit comprising a motor having a motor shaft that is driven into rotation and that comprises a motion converter for converting the rotational motion into a reciprocating motion. The present invention is also concerned with a personal care device that comprises such a drive unit to drive a driven element of the personal care device into a reciprocating or oscillating motion.

### BACKGROUND OF THE INVENTION

It is generally known to convert a rotary motion that may be provided by the shaft of a DC motor into an oscillatory motion by an appropriate gear mechanism, e.g. by means of a four-bar linkage as is described in DE 39 37 854 A1.

It is also known to provide a conversion mechanism having the mentioned function by means of a less gear wheels comprising arrangement. DE 34 30 562 C1 describes an apparatus for converting the rotary motion of an eccentric driven by a motor shaft into a reciprocating motion of a working tool of an electrically driven small electric appliance. The converting mechanism comprises a connecting rod connected with the eccentric and with a first lever arm of a double-armed rocker lever. The connecting rod comprises a film hinge, the center axis of said film hinge crosses the longitudinal axis of the first lever arm. The first lever arm is designed to be elastically twistable about its longitudinal axis. The double-armed rocker lever is pivotably mounted at a housing of the electric appliance and further comprises an axle pin that is coupled with the working tool. In operation the axle pin moves in an oscillating wiping motion relative to the pivot mount of the double-armed rocker lever.

Document US 4 367 658 discloses drive means having an oscillating member that consists of a bell-crank lever and has in vertical section the configuration of an isosceles right-angled triangle having legs which are constituted by the lever arms. Adjacent to a corner, the oscillating member is connected by a film hinge to a holder, which is secured by screws to a housing. An oscillating arm has a bearing bore and is secured to the free end of the lever arm of the oscillating member. The oscillating arm consists of a rectangular oscillating frame having long side bars, which constitute film hinges defining vertical bending axes. The bars are connected to the lever arm by thinner portions, which constitute film hinges defining horizontal bending axes. The bars are connected at one end by a bar, to the center of which an arm is secured. The arm is provided in its free end portion with the bearing bore for a crank pin. The arm consists also of a bar which constitutes a film hinge that defines a vertical bending axis. The crank pin is eccentrically secured to a shaft of an electric motor. An oscillating beam or bar is secured by the film hinge to the free end of the lever arm of the oscillating member and by means which are not shown is connected to the element which should be driven to perform a translational reciprocating motion.

Document US 4 649 762 discloses a device for converting the rotary motion of an eccentric driven by a motor shaft into an oscillating motion of a working tool in electrically powered appliances, consisting of a double-armed rocker arm and an oscillating body, connecting the rocker arm with the eccentric, composed of three connecting arms, two of which are assembled into a frame-like structure by appropriate design, whereby the eccentric engages one meeting point and the third connecting arm engages the other meeting point, said third arm being rigidly connected with one lever arm of the double-armed rocker arm. The connecting arms are each provided with a film hinge, of which two hinges lie on a common middle/bending axis which intersects the lengthwise axis of the double-armed rocker arm.

It is an object to provide a drive unit that is arranged to convert a rotary motion provided by a motor into a linearly reciprocating motion for driving a driven element such as a personal care head of a personal care device, preferably where the conversion is achieved in an efficient and/or low noise manner.

### SUMMARY OF THE INVENTION

In accordance with the present invention, a drive unit for converting a rotational motion into a linear reciprocating motion is provided in accordance with claim 1. The dependent claims define further embodiments of the invention.

In accordance with the present invention, a personal care device is provided that comprises a drive unit as proposed.

### BRIEF DESCRIPTION OF THE DRAWINGS

The present invention will be further elucidated by a detailed description of example embodiments and with reference to figures. In the figures
- Fig. 1: is a depiction of a personal care device realized as an electric toothbrush comprising a handle section and a head section, where the head section comprises a driven element realized as a personal care head;
- Fig. 2: is a cross-sectional cut through a top portion of a handle section of a personal care device comprising an exemplary drive unit in accordance with the present invention;
- Fig. 3: is a depiction of an example drive unit in accordance with the present invention where the deformable unit may at least in part be made from bent sheet metal;
- Fig. 4: is a depiction of another example deformable unit that can be used in a drive unit as herein disclosed;
- Fig. 5: is a depiction of another example drive unit in accordance with the present invention where the deformable unit may at least partly be made from plastic material;
- Fig. 6: is a depiction of another example drive unit in accordance with the present invention, where the drive unit comprises a frame structure;
- Fig. 7: is a depiction of a further example drive unit in accordance with the present invention, where the deformable unit comprises only two arm sections;
- Fig. 8A: is a graph showing the power consumption of several drive units under various load conditions at a rotation frequency of 85 Hz; and
- Fig. 8B: is a graph showing the power consumption of several drive units under various load conditions at a rotation frequency of 100 Hz.

### DETAILED DESCRIPTION OF THE INVENTION

The present invention is concerned with a drive unit and a personal care device comprising such a drive unit that is arranged to convert a rotary motion provided by a shaft of a motor such as a DC motor into a linear reciprocating motion, preferably wherein the direction of said linear reciprocating motion coincides with or is parallel to a longitudinal axis of the motor shaft. It is generally known to provide a linear reciprocating motion by means of a resonant linear drive, but such a drive has typically high manufacturing costs and requires a complex control concept that may make use of a high performing microprocessor. The drive unit of the present invention may make use of a standard DC motor that can be acquired as an off-the-shelf part and has thus a typically low-cost profile. In order to achieve a conversion as described, the motor shaft comprises a motor shaft extension comprising at least a first eccentric shaft element that is arranged eccentric with respect to the longitudinal axis of the motor shaft. The motor shaft extension may be integral with the motor shaft or may be a separate part that is detachably or non-detachably connected with the motor shaft. In accordance with the prosed drive unit, the first eccentric shaft element is coupled with a deformable unit that is arranged to be periodically deformed when the motor shaft rotates, where typically the rotation frequency of the motor shaft is the frequency of the periodic deformation of the deformable unit. The deformation is in particular achieved by a mechanical interaction of at least the first eccentric shaft element with the deformable unit, e.g. a first crossbeam may connect the first eccentric shaft element and the deformable unit to transfer a motion from the first eccentric shaft element to the deformable unit. The deformable unit comprises a coupling element that itself may be connected with a drive shaft or may be connectable with a drive shaft. The deformable unit is arranged to deform periodically so that a longitudinal position of the coupling element changes periodically. In accordance with the present description, the coupling element or a portion of the deformable unit is coupled with a linear guide so that the periodic motion of the coupling element is essentially restricted to a linear reciprocating motion in the longitudinal direction. The longitudinal direction may in particular be defined by the longitudinal axis of the motor shaft, i.e. the rotation axis of the motor shaft.

In an embodiment, the deformable unit has a length extension in the direction of the longitudinal axis of the motor shaft, which length extension in operation changes periodically due to a deformation of the deformable unit. The coupling element may then be disposed at the top of the deformable unit, i.e. at the most distal point of the deformable unit along the longitudinal direction with respect to the motor shaft, even though this is just one example and the coupling element may also be disposed at another position of the deformable unit.

The first eccentric shaft element may be coupled with the deformable unit by means of a connection rod or crossbeam. The deformable unit may be essentially realized as an integral, single unit that can elastically, preferably resiliently deform to achieve the periodically changing length extension. Realizing the deformable unit as a single unit that can elastically and/or resiliently deform leads to a relatively efficient (i.e. low power consuming) conversion mechanism and/or to a relatively silent (i.e. low noise generating) conversion mechanism. Due to the realization as an integral unit, no frictional connections are present via which electrical energy may become converted into thermal energy that is lost and will thus decrease the energetic efficiency of such a conversion mechanism. Specifically, a resiliently deformable unit stores energy in the deformation process, which stored energy is released when the resiliently deformable unit deforms back into its natural or rest state. Gear mechanisms that comprise interacting elements such as meshed gear wheels have a tendency to generate noise due to mechanical tolerances of the meshed partners, which noise may reach a level that is unpleasant for the user of a device in which such a drive unit is utilized and additional measures may need to be taken to dampen said noise. In accordance with at least one aspect, the deformable unit and preferably the complete drive unit is free from any meshed gears and/or friction wheels. Preferably, the deformable unit is at least partially resilient/spring-like so that at least a part of the energy used for the deformation of the deformable unit from a rest state into a deformed state is stored in the spring-like portion(s) of the deformable unit and is released once the deformable unit is brought back into its rest state.

In accordance with the present invention, the first eccentric shaft element (and potentially any further eccentric shaft element) is coupled with the deformable unit so that the eccentric motion of the first eccentric shaft element around the longitudinal axis of the motor shaft is translated into a deformation of the deformable unit in a manner that the coupling element performs a linear reciprocation long a virtual line that coincides with or is parallel to the longitudinal axis of the motor shaft. As was already mentioned, in accordance with the present invention, a linear guiding structure/a linear guide is used to restrict the freedom of motion of the coupling element essentially to the linear reciprocation. In some example embodiments, the deformable unit is structured to provide a linear guide function by itself.

In the context of the present description "personal care" shall mean the nurture (or care) of the skin and of its adnexa (i.e. hairs and nails) and of the teeth and the oral cavity (including the tongue, the gums etc.), where the aim is on the one hand the prevention of illnesses and the maintenance and strengthening of health and on the other hand the cosmetic treatment and improvement of the appearance of the skin and its adnexa. It shall include the maintenance and strengthening of wellbeing. This includes skin care, hair care, and oral care as well as nail care. This further includes grooming activities such as beard care, shaving, and depilation. A "personal care device" thus means any device for performing such nurturing or grooming activity, e.g. (cosmetic) skin treatment devices such as skin massage devices or skin brushes; wet razors; electric shavers or trimmers; electric epilators; and oral care devices such as manual or electric toothbrushes, (electric) flossers, (electric) irrigators, (electric) tongue cleaners, or (electric) gum massagers. This shall not exclude that the proposed personal care device may have a more pronounced benefit in one or several of these nurturing or device areas than in one or several other of these areas. In the present description, an electric toothbrush was chosen to present details of the proposed personal care device, which shall be understood as not limiting. To the extent in which the details are not specific for an electric toothbrush, the proposed technology can be used in any other personal care device.

A drive unit as proposed herein may be used in a personal care device, preferably to drive a driven element such as a treatment head of the personal care device, e.g. a brush head of an electric toothbrush. The drive unit described herein is designed to convert the rotational motion provided by a motor via a motor shaft into a linear reciprocating motion of a drive shaft, the linear reciprocating motion occurring along an axis that coincides with or is parallel to the longitudinal axis around which the motor shaft rotates.

The deformable unit comprises a plurality of arm segments or arm sections, e.g. it may comprise two arm sections or three arm sections or four arm sections etc. Starting with an example comprising two arm sections, namely a first arm section and a second arm section, each of the arm sections has a length along a length axis, a width along a width axis and a thickness along a thickness axis, where the length is larger than the width and the width is larger than the thickness, preferably wherein the length may be at least twice as large as the width and at least five times as large as the thickness. Each of the arm sections has two ends - a first end and a second end, which ends are opposite to each other in the length direction. Preferably, the first end of the first arm section is fixedly mounted with respect to the motor on a mounting structure and the second end of the first arm section is connected with the first end of the second arm section, preferably such that the first arm section and the second arm section meet at an obtuse angle, i.e. at an angle larger than 90 degrees, in a rest or neutral state of the deformable unit, even though this shall not exclude that the arms sections meet at an angle of 90 degrees or at an acute angle or at 180 degrees. A coupling element that may comprise or may be connectable with a drive shaft may be connected to the second end of the second arm section or may be part of the second end of the second arm section. In accordance with the present invention, the second end of the second arm section is coupled with a linear guide that essentially confines the freedom of motion of the second end of the second arm section to a linear motion, e.g. a linear reciprocating motion, in a direction that coincides with or is parallel to the longitudinal axis of the motor shaft. As will be discussed in more detail in the following, such linear guide may be provided by further arm sections of the deformable unit. But the second end of the second arm section may alternatively or additionally be guided by a linear guide rail. With respect to the longitudinal direction defined by the longitudinal axis of the motor shaft, the second end of the first arm section may be arranged above the first end of the first arm section and the second end of the second arm section may be arranged above the second end of the first arm section and also above the first end of the second arm section that is connected with the second end of the first arm section.

In accordance with at least aspect, the deformable unit comprises two further arm sections, namely a third arm section and a fourth arm section that each have a first end and a second end and each of the arm sections has a length along a length axis, a width along a width axis and a thickness along a thickness axis, where the length is larger than the width and the width is larger than the thickness, preferably wherein the length may be at least twice as large as the width and at least five times as large as the thickness. The first end of the third arm section may be fixedly mounted with respect to the motor, e.g. the first end of the third arm section may be mounted at the same mounting structure as the first end of the first arm section. The second end of the third arm section may be connected with the first end of the fourth arm section and the second end of the fourth arm section may be connected with the second end of the second arm section.

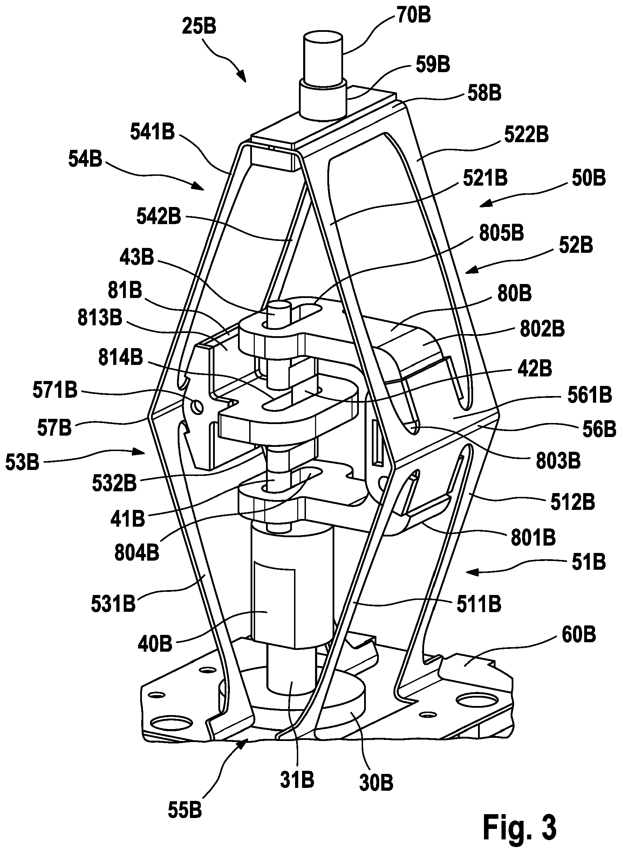

The deformable unit may be designed as a convex quadrilateral-type structure such as a rhomboidal shape. The deformable unit may thus be described as having four edges and for vertices, even though it shall be understood that the vertices may not be point-like but actually may be realized as "extended vertices". For example, two arms of the convex quadrilateral-type structure may be mounted at a mounting structure, but the arms may not meet but may rather be mounted with a distance. The basic convex quadrilateral-type structure is understood to be maintained despite such extended vertices. This is exemplified in connection with Fig. 3.

As was already mentioned in connection with above examples, the deformable unit may comprise arm sections that are mechanically connected with each other. In one realization, two arms sections are connected by means of a hinge-like structure so that the two arm sections can move relative to each other by moving around the hinge point. The hinge-like structure may be realized by a pivot. As one alternative to a pivot, the arm sections may be connected by means of a living hinge or film hinge. Instead of rigid arm sections connected by hinges, the arm sections themselves may be resiliently deformable when the deformable unit is deformed and the connection points of the arm sections may be rigid, i.e. the connection points may not be realized as hinges. The arm sections may comprise reinforcement structures that essentially avoid that the arms sections themselves deform but that the deformation essentially occurs in the hinges. With respect to this it shall be understood that the deformable unit may be made from a deformable (e.g. bendable) and specifically resilient (i.e. spring-like) material and that certain constructional details are used to focus the deformation onto certain areas of the deformable unit, e.g. film hinges and reinforcement structures are examples of such constructional details. In some examples, two or more materials may be combined to create a deformable unit, e.g. sheet metal may be partly overmolded with plastic material in order to form a deformable unit.

The deformable unit may in particular be realized as a single, specifically integral unit made from a single piece of material, e.g. from a bent metal sheet or from injection-molded plastic. This shall not exclude that the deformable unit is realized by connecting two or more elements in a specifically non-detachable manner, e.g. by welding together two or more metal elements. The deformable unit may also be made from two or more materials as mentioned in the previous paragraph, e.g. the arm sections may mainly be made from sheet metal and the hinges may be realized from injection molded plastic.

In order to transfer motion from at least the first eccentric shaft element to the deformable unit, a first connection rod or a first crossbeam may be used. In some examples the first crossbeam or first connection rod is integral with the deformable unit, e.g. it may be made together with the deformable unit in a plastic injection molding process. But the first crossbeam or first connection rod may instead be a separate element that may be detachably or non-detachably connected with the deformable unit. The first crossbeam or first connection rod may extend along a first crossbeam axis that is essentially perpendicular to the longitudinal axis of the motor shaft. While the first eccentric motor shaft element rotates around the longitudinal axis of the motor shaft, the first crossbeam or first connection rod may be coupled with the first eccentric shaft element so that only a motion of the first eccentric shaft element along one axis is transferred by the first connection rod or first crossbeam to the deformable unit. E.g. the first crossbeam or first connection rod comprises an elongated hole through which the first eccentric shaft element extends, which elongated hole may extend in a direction that is essentially perpendicular to the longitudinal axis of the motor shaft and essentially perpendicular to the first crossbeam axis (which is the extension axis of the first crossbeam or first connection rod). The elongated hole may essentially have a width that coincides with the diameter of the first eccentric shaft element so that the first eccentric shaft element moves without a gap in the elongated hole and will thus essentially not cause noise during operation due to a gap. The inner surface of the elongated hole and/or the outer surface of the first eccentric shaft element may be coated with a friction reducing material or the two surfaces may be made from materials having a low friction coefficient.

In some examples, at least a second eccentric shaft element is provided, which second eccentric shaft element may be disposed at a 180-degrees offset with respect to the first eccentric shaft element so that during rotation of the motor shaft, the second eccentric shaft element follows the first eccentric shaft element with a 180-degrees offset. As was described for the first eccentric shaft element, a second crossbeam or second connection rod may be used to transfer the motion of the second eccentric shaft element to the deformable unit. The description of the connection by means of an elongated hole also holds for the second eccentric shaft element and the second crossbeam or second connection rod. In case of a 180-degrees offset, the first crossbeam may then be arranged to move into one direction (e.g. to the left) while the second crossbeam is arranged to then move into the opposite direction (e.g. to the right) and vice versa. The first crossbeam may in particular be connected with the deformable unit in an area where a first and a second arm section are connected and the second crossbeam may then be connected with the deformable unit where a third and a fourth arm section are connected. Such a design with a first and a second crossbeam may thus be specifically used in connection with a deformable unit comprising four arm sections, e.g. where the deformable unit is realized as a convex quadrilateral-type structure.

The deformable unit may be mounted at a frame structure as mounting structure, which frame structure may at least partly envelope the deformable unit and the frame structure may realize a linear guide for the deformable unit, e.g. the frame structure may comprise a guide for the coupling element or for a drive shaft secured at the coupling element so that the motion of the coupling element is essentially restricted to a linear reciprocation in a direction that coincides with or is parallel to the longitudinal axis of the motor shaft. The frame structure may essentially be rigid so that the deformable unit can essentially deform independently from the frame structure, the frame structure then providing one or several spatially fixed mounting location(s), where spatially fixed shall mean spatially fixed with reference to the motor.

As was mentioned, the drive unit discussed herein may be used in a personal care device such as an electric toothbrush or an electric hair removal device, where the drive unit is utilized to drive a driven element into motion, the driven element, e.g., being a personal care head such as a brush head or an undercutter knife for a shaver.

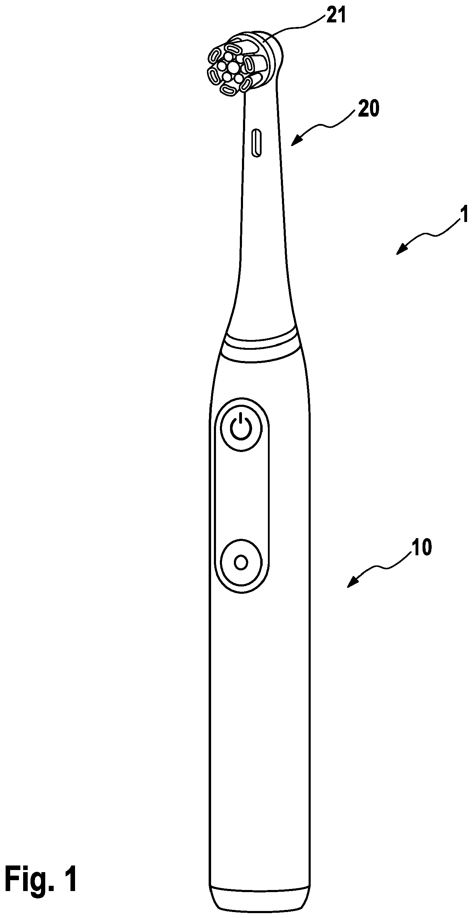

Fig. 1 is a depiction of an example personal care device 1 realized as an electric toothbrush, the personal care device 1 comprising a handle section 10 and a head section 20, where the head section 20 may comprise a driven element 21, here realized as a brush head. The handle section 20 may comprise a drive unit as discussed herein for driving the driven element 21 into motion.

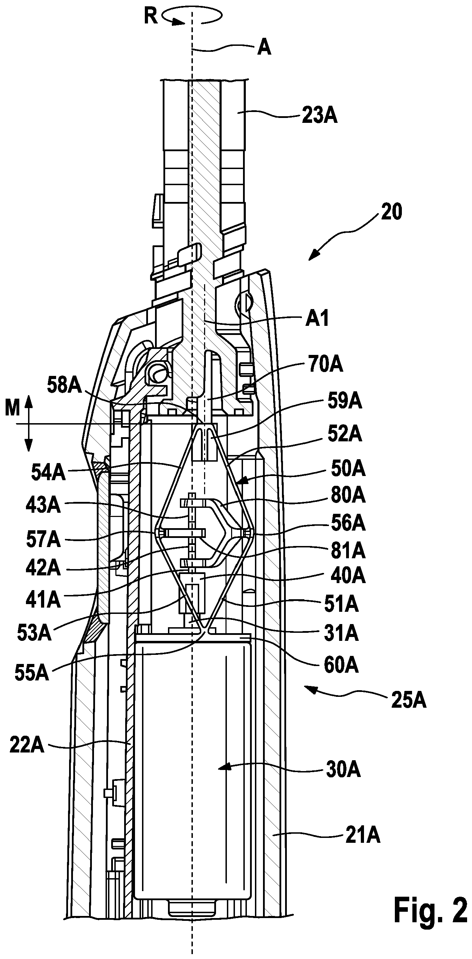

Fig. 2 is a cross-sectional cut through a handle section 20A of a personal care device, e.g. the handle section 20A may be used as handle section for a personal care device as depicted in Fig. 1. A lower portion of the handle section 20A is not shown. The handle section 20A comprises a handle housing 21A in which a motor carrier 22A is mounted and an attachment shaft 23A for detachable attachment of a head section as is generally shown in Fig. 1. The handle section 20A also comprises a drive unit 25A that is described in the following and where a similar drive unit 25B will be described in even more detail with reference to Fig. 3.

A motor 30A is secured at the motor carrier 22A, the motor 30A having a motor shaft 31A for providing a rotational motion R around a longitudinal axis A of the motor shaft 31A. The motor shaft 31A is extended by a motor shaft extension 40A that in the shown embodiment comprises a first eccentric shaft element 41A, a second eccentric shaft element 42A and a third eccentric shaft element 43A. The first eccentric shaft element 41A and the third eccentric shaft element 43A have the same circumferential position and the second eccentric shaft element 42A has a circumferential position that is offset by 180 degrees to the first and third eccentric shaft elements 41A, 43A. The first and the third eccentric shaft elements 41A and 43A are coupled with a first crossbeam 80A. The first crossbeam 80A has a fork-like structure with two prongs, where each of the prongs is coupled with one of the first and third eccentric shaft elements 41A and 43A. Thus, the first and the third eccentric shaft elements 41A and 43A work together like a single eccentric shaft element to put the first crossbeam into a periodic linear reciprocating motion along a first crossbeam axis that is perpendicular to the longitudinal axis A. The second eccentric shaft element 42A is likewise coupled with a second crossbeam 81A and when the second eccentric shaft element 42A rotates around the longitudinal axis A, the second eccentric shaft element 42A puts the second crossbeam 81A into a periodic linear reciprocating motion along a second crossbeam axis that is coinciding with or at least parallel to the first crossbeam axis and that is offset by 180 degrees, i.e. when the first crossbeam is moved to the right, the second crossbeam is moved to the left and vice versa (where here left and right are defined with respect to the paper plane).

The first and second crossbeams 80A and 81A are each connected with a deformable unit 50A. The deformable unit 50A is here realized as a rhomboidal structure having four edges and four vertices, but this shall not be considered as limiting. The rhomboidal structure is a specific case from the more general class of convex quadrilateral-type structures, which represent one class of possible realizations of the deformable unit. The four edges of the rhomboidal structure are here realized by four arm sections 51A, 52A, 53A and 54A. A first arm section 51A has a first end that is secured at a mounting structure 60A, which mounting structure 60A is fixedly mounted at the motor 30A. Opposite to the first arm section 51A in the rhomboidal structure is a third arm section 53A that has a first end that is as well secured at the mounting structure 60A so that the first ends of the first arm section 51A and of the third arm section 53A form a first vertex 55A of the rhomboidal structure of the deformable unit 50A. A second end of the first arm section 51A is connected with a first end of a second arm section 52A at a generally obtuse angle and the connection point is considered as a second vertex 56A (or a "knee section" due to the obtuse angle at which the first and second arm sections meet) of the rhomboidal structure formed by the deformable unit 50A. A second end of the second arm section 52A is connected with a coupling element 59A. A first end of a fourth arm section 54A opposite to the second arm section 52A is connected with a second end of the third arm section 53A at an obtuse angle, thereby forming a third vertex 57A (or a further "knee section"). A second end of the second arm section 52A and a second end of the fourth arm section 54A are secured to each other at the coupling element 59A, thereby forming a fourth vertex 58A.

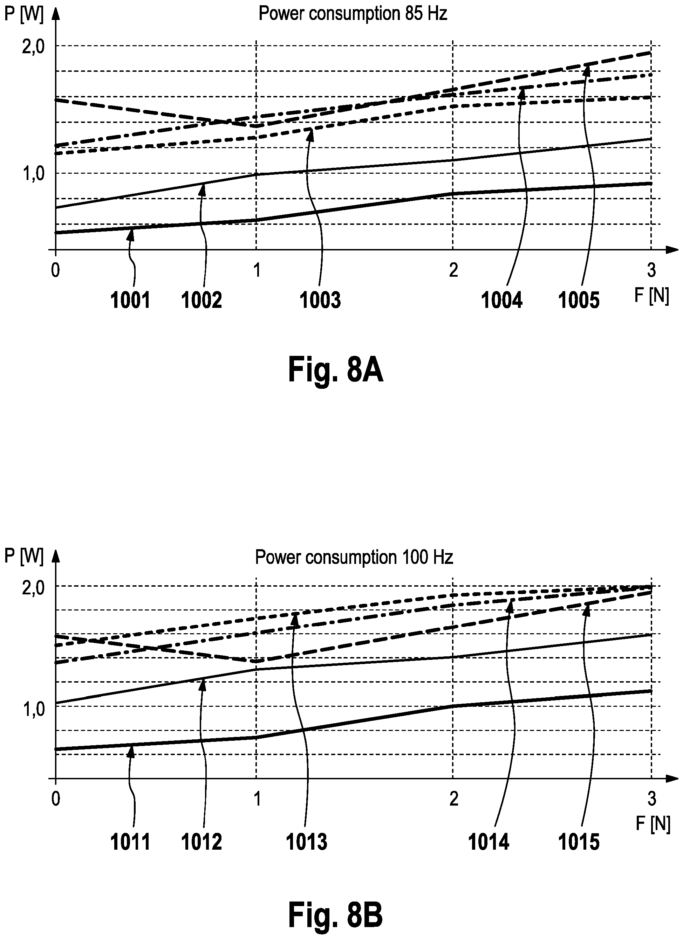

The first crossbeam 80A is connected with the second vertex 56A and the second crossbeam 81A is fixedly connected with the third vertex 57A. Once the first and second crossbeams move both outwards or both inwards, the deformable unit 50A is deformed and the coupling element 59A is set into a linearly reciprocating motion along axis A1. When the two crossbeams 80A, 81A move outwards, the coupling element 59A is drawn downwards to the motor 30A and when the two crossbeams 80A, 81A move inwards, the coupling element 59A is shifted upwards away from the motor 30A - a periodic linear reciprocating motion M as indicated by a double arrow results, which linear reciprocating motion occurs along the axis A1 that here is parallel to the longitudinal axis A, which is the longitudinal axis of the motor shaft, i.e. the rotation axis of the motor shaft as indicated by arrow R. The four vertices 55A, 56A, 57A and 58A may be realized as essentially rigid structures without a hinge functionality. The arm sections 51A, 52A, 53A and 54A then need each to be deformable from their essential linear extension as shown in Fig. 2, which represents their natural state or rest state, into a deformed state, e.g. a shape where the arm sections 51A, 52, 53A and 54A extend more on an S-shaped curve between the respective vertices. The arm sections 51A, 52A, 53A and 54A may essentially be made from a resilient material such as a spring steel or a resilient plastic material so that the energy that is needed to deform the arm sections 51A, 52A, 53A and 54A is stored in the resilient material and is released again when the arm sections 51A, 52A, 53A and 54A are brought back into their natural state. The deformable unit 50A is free from any meshed gear elements and also does not comprise any frictionally engaged elements and thus has a design that is inherently rather silent in operation and also is energetically rather efficient, i.e. it requires only a low power level in comparison to other conversion mechanism comprising meshed gear elements and the like - this is also exemplified in Figs. 8A and 8B.

This aspect will be discussed in more detail with respect to Fig. 3, but the first and second crossbeams 80A, 81A may be coupled to the eccentric shaft elements 41A, 42A and 43A by means of elongated holes.

The motor 30A together with the shaft extension 40A, the first and second crossbeams 80A and 81A and the deformable unit 50 form the drive unit 25A in accordance with the present invention.

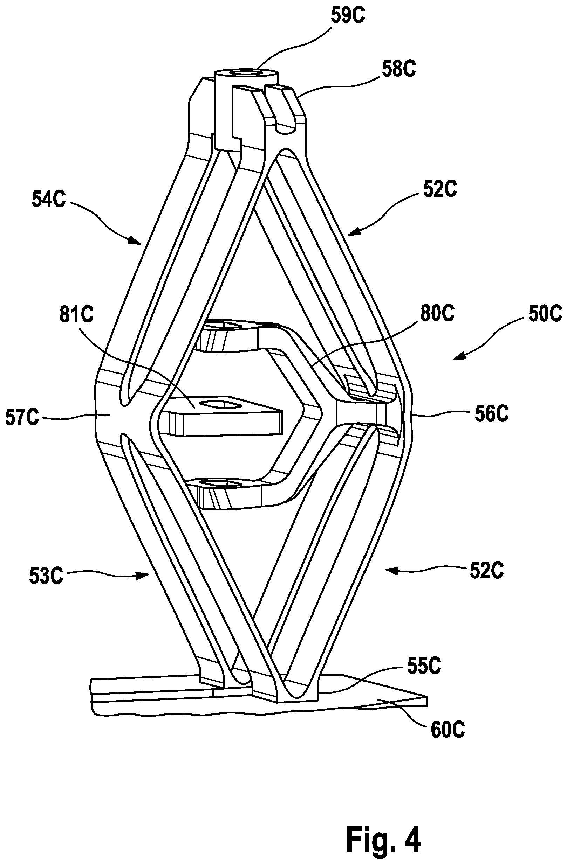

Fig. 3 is a depiction of another example drive unit 25B that has various structural similarities with the drive unit 25A shown in and discussed with reference to Fig. 2. The drive unit 25B comprises a motor 30B (only partly shown) with a motor shaft 31B and a shaft extension 40B that is attached to the motor shaft 31B. Generally, the shaft extension 40B may be integral with the motor shaft 31B or may be a separate element that is fixedly secured to the motor shaft 31A. The shaft extension 40B may in the latter case be snap-fitted onto the motor shaft 31B, may be frictionally locked, welded, glued or fixedly attached in any other manner known to the skilled person. In the shown embodiment, the drive unit 25B is connected with a drive shaft 70B that can be coupled with a driven element. While the motor shaft 31B will provide a rotational motion around its longitudinal axis, this motion is converted by the drive unit 25B and the drive shaft 70B will provide a periodic linear reciprocation motion along an axis that is coinciding with or parallel to the longitudinal axis of the motor shaft 31B (see Fig. 2 for an indication of the respective axes or directions). The shaft extension 40B comprises a first, a second and a third eccentric shaft element 41B, 42B, and 43B. The eccentric shaft elements 41B, 42B, and 43B are offset with respect to the longitudinal axis and thus rotate around the longitudinal axis along circular paths in operation. As was described for Fig. 2, the first and third eccentric shaft elements 41B and 43B have the same circumferential position and thus move in positional alignment, while the second eccentric shaft element 42B is circumferentially positioned at a 180-degrees offset. The first and third eccentric shaft elements 41B and 43B are coupled with a deformable unit 50B by means of a first crossbeam 80B that is again forklike with two prongs 801B and 802B. The prongs 801B and 802B are here parallel to each other, but this shall not be understood as limiting and any other structure may be chosen as well - e.g. see Fig. 4. The second eccentric shaft element 42B is coupled with the deformable unit 50B by means of a second crossbeam 81B. The first and second crossbeams 80B and 81B may be said to extend parallel to each other. The first crossbeam 80B is arranged to move along a first crossbeam axis that is perpendicular to the longitudinal axis of the motor shaft 31B and the second crossbeam 81B is arranged to move along a second crossbeam axis parallel to the first crossbeam axis, which second crossbeam axis is then of course also perpendicular to the longitudinal axis of the motor shaft 31B.

The deformable unit 50B is again designed to have a basically rhomboidal structure with four edges and four vertices. A first edge is realized by a first arm section S 1B, a second edge is realized by a second arm section 52B, a third edge is realized by a third arm section 53B, and a fourth edge is realized by a fourth arm section 54B. The first arm section 51B and the third arm section 53B are each mounted with a first end on a mounting structure 60B that is here fixedly connected at the motor 30B or with respect to the motor 30B. The mounting points together form a first vertex 55B of the rhomboidal structure, where the vertex is a so-called "extended vertex" as the mounting sides of the first ends of the first and second arm sections 51B and 53B have a certain distance. The first and third arm sections 51B and 53B are outwards bent with respect to a center axis of the rhomboidal structure. The first arm section 51B has a second end connected with a first end of a second arm section 52B to form a second vertex 56B of the rhomboidal structure. As seen in Fig. 2, the first and the second arms sections 51B and 52B meet at an obtuse angle, which shall not be considered as limiting - depending on the design of the deformable unit and in case of a design comprising arm sections basically as discussed in the present context, these arm sections may meet at an obtuse or an acute angle or the angle between both arm sections may be about 180 degrees in the rest state of the deformable unit. Further, a second end of the third arm section 52B and a first end of the fourth arm section 54B are connected and form a third vertex 57B. The second ends of the second arm section 52B and of the fourth arm section 54B are connected to form a fourth vertex 58B, where also a coupling element 59B is integrated into this slightly extended fourth vertex 58B. The drive shaft 70B is here connected with the coupling element 59B.

As can be seen in the perspective view shown in Fig. 3, the arm sections 51B, 52B, 53B and 54B are realized as "double-arm sections", i.e. each of the arm sections comprises two parallel arm elements arranged at a distance, which makes the deformable unit 50B overall rather lightweight on the one hand but still stable in particular against torsional deformations on the other hand. In the design as shown, the first arm section 51B comprises two parallel arm elements 511B and 512B, the second arm section 52B comprises two parallel arm elements 521B and 522B, the third arm section 53B comprises two parallel arm elements 531B and 532B and the fourth arm section 54B comprises two parallel arm elements 541B and 542B. At the second, third and fourth vertices, the parallel arm elements are connected by vertical bar elements. The second vertex 56B and the third vertex 57B each comprise mounting elements 561B and 571B, respectively, that provide fixation points for the first and second crossbeams 80B and 81B.

The first crossbeam 80B comprises a first and a second crossbeam arm 801B and 802B that are here parallel to each other for a certain extension length to not get in conflict with the second crossbeam 81B moving in between the two crossbeam arms 801B and 802B, where the first crossbeam arm 801B is coupled with the first eccentric shaft element 41B by means of an elongated hole 804B and the second crossbeam arm 802B is coupled to the third eccentric shaft element 43B by means of an elongated hole 805B. The elongated holes 804B and 805B are oriented perpendicular to the longitudinal axis of the motor shaft and perpendicular to the first crossbeam axis. The first eccentric shaft element 41B extends through the elongated hole 804B and the third eccentric shaft element 43B extends through the elongated hole 805B. The first crossbeam 80B comprises a connecting portion 803B at which the first and second crossbeam arms 801B and 802B meet and which connecting portion 803B is fixedly connected with the mounting element 561B of the second vertex 56B of the deformable unit 50B. The first crossbeam 80B and the mounting element 561B may be connected by means of overmolding, caulking, screwing, gluing, welding or by any other connection means known to the skilled person. The elongated holes 804B and 805B are sized so that the first and third eccentric shaft elements 41B and 43B essentially tightly fit through the elongated holes 804B and 805B, respectively, with respect to the direction defined by the first crossbeam axis and can move freely in the long direction of the elongated holes 804B and 805B when the motor shaft 31B rotates the shaft extension 40B. Due this design, the elongated holes 804B and 805B only transfer the motion of the first and third eccentric shaft elements 41B and 43B in the direction of the first crossbeam axis to the second vertex 56B. It is noted again that the first and the second eccentric shaft elements 41B and 41C move in alignment. Similarly, the second crossbeam 81B comprises a connecting portion 813B that is fixedly connected with the mounting element 571B of the third vertex 57B. The elongated hole 814B is sized so that the second eccentric shaft element 42B essentially tightly fits through the elongated hole 814B with respect to the direction defined by the second crossbeam axis and can move freely in the long direction of the elongated hole 814B when the motor shaft 31B rotates the shaft extension 40B. Due this design, the elongated hole 814B only transfers the motion of the second eccentric shaft elements 42B in the direction of the second crossbeam axis to the third vertex 57B. As the second eccentric shaft element 42B is circumferentially offset by a 180-degrees distance to the first and third eccentric shaft elements 41B and 43B, the first crossbeam 80B and the second crossbeam 81B move in a counter-oscillating manner, i.e. when the fist crossbeam moves to the right ("right" defined with respect to the paper plane) then the second crossbeam moves to the left and vice versa, implying that the motion direction of both crossbeams periodically reverses at the same time instants. Due to this design, the deformable unit 50B is first "widened" when the first crossbeam 80B moves to the right and the second crossbeam 81B moves to the left, which causes the coupling element 59B to be drawn towards the motor 30B and the deformable unit 50B is then "squeezed together" when the first crossbeam 80B moves to the left and the second crossbeam 81B moves to the right, which moves the coupling element 59B upwards and beyond its rest position to a maximum deflection away from the motor 30B. This linear reciprocating motion of the coupling element 59B happens periodically and along a direction that is coinciding with or that is parallel to the longitudinal axis of the motor shaft 31B.

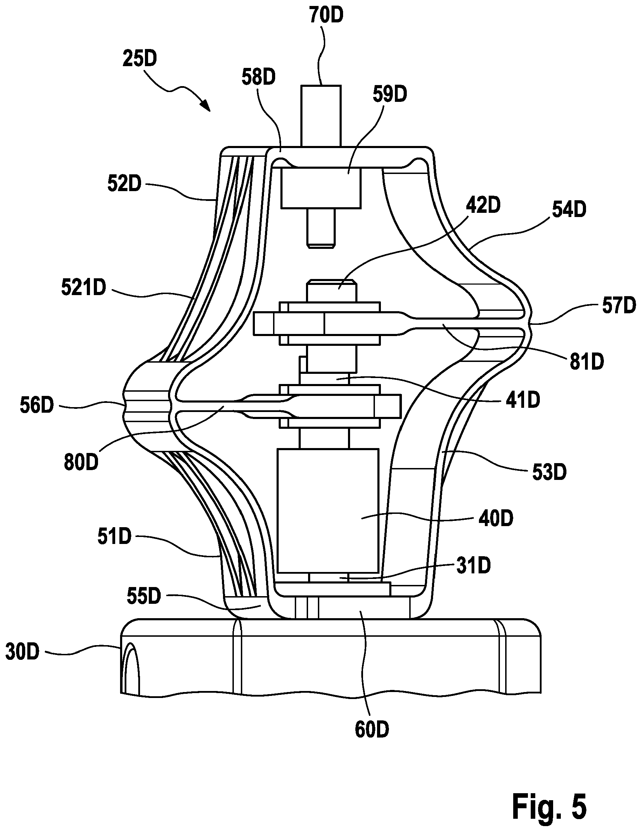

In the examples shown in Figs. 2 and 3, the first crossbeam has a fork-like structure and cooperates with two axially displaced eccentric shaft elements, which allows the coupling portion of the first cross beam to have the same axial position as the axial position of the coupling portion of the second crossbeam. This allows a design in which the first and third arm elements and the second and fourth arm elements have the same length. With reference to Fig. 5 an embodiment will be discussed that is asymmetric in this respect.

It is believed that the vibration profile of a drive unit with two crossbeams is limited if the mass of the first and second crossbeams is about the same.

Fig. 4 is a depiction of an example deformable unit 50C essentially shown in isolation, where a first crossbeam 80C and a second crossbeam 81C are integral with the deformable unit 50C. The deformable unit 50 C may be made in a single plastic injection molding step together with the crossbeams 80C, 81C or, alternatively, the deformable unit 50C may be made from metal and the crossbeams 80C, 81C are made from metal as well and are welded to the deformable unit 50C. The deformable unit 50C as shown again comprises four arm sections 51C, 52C, 53C and 54C and comprises four vertices, 55C, 56C, 57C and 58C, where the bottom and top vertices 55C and 58C are only slightly extended vertices. The fourth or top vertex 58C is connected or integral with a coupling unit 59C that is arranged hollow to receive a drive shaft. The first or bottom vertex 55C is fixedly secured at a mounting structure 60C.

Fig. 5 is a depiction of another example drive unit 25D comprising a deformable unit 50D that may be made by a plastic injection molding process. The drive unit 25D comprises a motor 30D (only partly shown) having a drive shaft 31D that is connected with a shaft extension 40D that comprises a first eccentric shaft element 41D and a second eccentric shaft element 42D. The deformable unit 50D comprises four arm sections 51D, 52D, 53D and 54D and four vertices 55D, 56D, 57D and 58D. The deformable unit 50D is integral with a first crossbeam 80D and a second crossbeam 81D, where the first crossbeam is coupled with the first eccentric shaft element 41D and the second crossbeam 81D is coupled with the second eccentric shaft element 42D. The first crossbeam 80D is integrally realized and thus fixedly connected with the second vertex 56D and the second crossbeam is integrally realized and thus fixedly connected with the third vertex 57D. In the shown design, the second crossbeam 81D is realized in a single prong design and as the first and second crossbeams 80D and 81D extend parallel to each other, the third vertex 57D is positioned above the second vertex 56D along the longitudinal direction going through the motor shaft 31D, where "above" here refers to a position farther away from the motor shaft 31D. Due to this specific design, the deformable unit 50D is not symmetric as it was the case for the examples shown in Figs. 2, 3 and 4 but asymmetric. The arm sections 51D, 52D, 53D and 54D comprise reinforcement structures, e.g. structures 521D, that cause the arm sections 51D, 52D, 53D and 54D to become relatively rigid and stiff between the vertices. The arm sections 51D, 52D, 53D and 54D are specifically shaped around the second vertex 56D and the third vertex 57D to form living hinges that allow a pivoting of the otherwise rather rigid arm sections S 1D, 52D, 53D and 54D around the vertices 56D and 57D. The top and bottom vertices 55D and 58D are realized as extended vertices, where a mounting structure 60C extends between the first ends of the first and the third arm sections 51D and 53D. The second ends of the second and the fourth arm sections 52D and 54D are connected or integral with a coupling section 59D that accommodates a drive shaft 70D. The second ends of the second and the fourth arm sections 52D and 54D are also shaped to form living hinges.

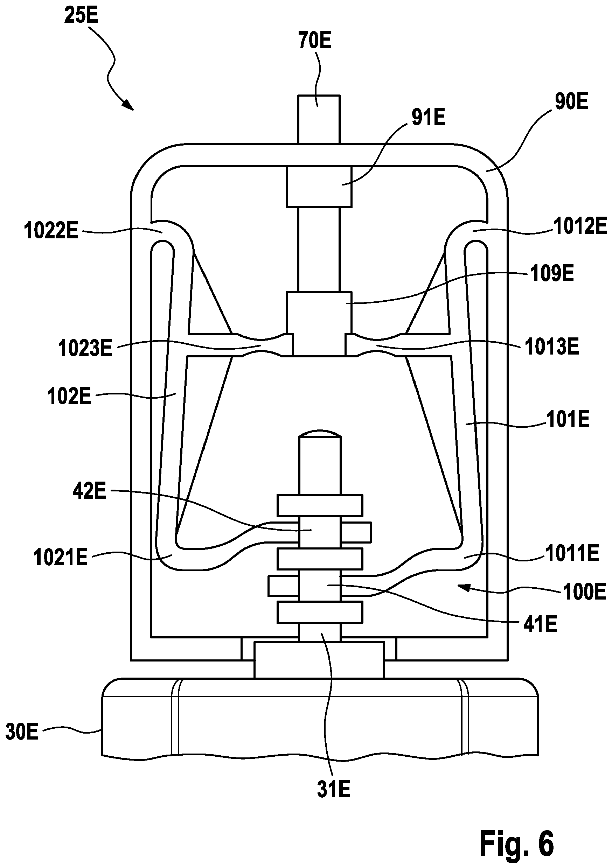

Fig. 6 is an example drive unit 25E that differs in several constructional aspects from the previous examples. First, the drive unit 25E comprises a frame structure 90E that surrounds a deformable unit 100E that is fastened at the frame structure 90E. In the shown example, the frame structure 90E and the deformable unit 100E may be one single integral element that may be manufactured by plastic injection molding. The frame structure 90E is relatively rigid - it may be made from metal or other materials that provide a high rigidity and stiffness or it may be just reasonably be thicker than the deformable portions of the deformable unit 50E. The frame structure 90E as shown is basically rectangular, i.e. the frame structure 90E looks basically like a picture frame. The frame structure 90E is fixedly mounted at or at least with respect to a motor 30E (only partly shown), the motor 30E having a motor shaft 31E that extends into a first eccentric shaft element 41E and a second eccentric shaft element 42E (the eccentric shaft elements 41E and 42E are shown in a center portion in which the eccentricity is not visible). The first eccentric shaft element 41E is connected to a basically L-shaped first arm section 101E and the second eccentric shaft element 42E is likewise connected with a basically L-shaped second arm section 102E. The L-shaped first and second arm sections 101E and 102E are connected to the frame structure 90E at the upper ends of the L. The first arm section 101E has a living hinge section 1012E via which it is connected to the frame structure 90E and the second arm section 102E has a living hinge section 1022E via which it is connected to the frame structure 90E. Further, the first arm section 101E has another living hinge section 1011E that is arranged in the comer area of the L-shaped first arm section 101E. When the first eccentric shaft element 41E rotates, the lateral portion of the L-shaped first arm section 101E is repeatedly pushed inwards and outwards (the frame structure 90E may comprise a cutout to allow the comer portion of the first arm section 101E to move outwards). Similarly, the second arm section 102E has another living hinge section 1021E that is arranged in the comer area of the L-shaped second arm section 101E. A centrally disposed coupling element 109E is connected to the first arm section 101E at about one third of the length of the vertical arm of the L by means of a living hinge section 1013E and is connected to the second arm section 102E at about one third of the length of the vertical arm of the L by means of a living hinge section 1023E. During the periodic motion of the eccentric shaft elements 41E and 42E, the coupling element 109E is periodically moved up and down, i.e. the coupling element 109E will linearly reciprocate along a longitudinal direction that coincides with or is parallel to the longitudinal axis of the motor shaft 31E. The coupling element 109E accommodates a drive shaft 70E, which drive shaft 70E is also guided by a guide element 91E provided by the frame structure 90E, which guide element 91E realizes a linear guide for the motion of the drive shaft 70E and hence for the coupling element 109E.

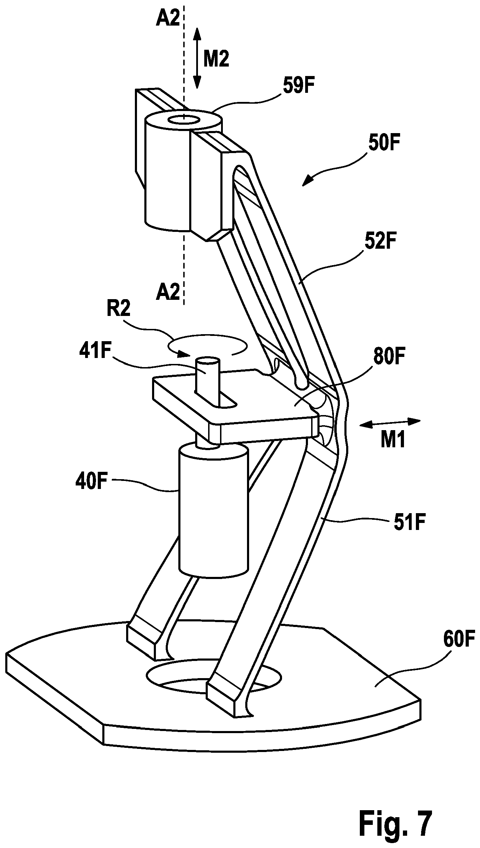

Fig. 7 is a depiction of an example deformable unit 50F that comprises a first arm section S1F and a second arm section 52F, where a first end of the first arm section S1F is mounted on a mounting support 60F that itself is fixedly mounted with respect to a motor (the motor is not shown). The deformable unit 50F may at least partly be made from plastic, e.g. made at least partly by a plastic injection molding process. The second end of the first arm section 51F is connected with a first end of a second arm section 52F, the connection area forming a "knee" section where the first and second arm sections meet at an obtuse angle in a rest state, and a second end of the second arm section 52F is connected with a coupling element 59F that is structured to receive a drive shaft (not shown) in a cylindrical receptacle, where the coupling element and hence the drive shaft are intended to move in a linear reciprocation along axis A1 as indicated by double arrow A2. While a motor itself is not shown, a motor shaft extension 40F is shown on which a first eccentric shaft element 41F is arranged, which first eccentric shaft element 41F is designed as a cylindrical element similar to the above discussed examples. The first eccentric shaft element will rotate around the longitudinal axis of the motor shaft once the motor shaft extension 40F is attached to such motor shaft as is indicated by arrow R2. The mounting support 60F comprises an essentially circular cutout so that at least a motor shaft can extend therethrough to become attached with the motor shaft extension 40F. The first eccentric shaft element 41F extends through an elongated hole of a first crossbeam 80F that will transfer motions in the direction M1 as indicated by a double arrow to the deformable unit 50F. The first crossbeam 80F is connected with the mentioned knee section where the first and second arm sections meet. This motion of the first crossbeam 80F will cause the deformable unit 50F to deform so that the coupling element 59F is set into motion. It is assumed here that the coupling element 59F is limited to a motion along the direction M2, the motion direction M2 being essentially perpendicular to the motion direction M1. It is assumed that this motion restriction is enforced by a linear guide. Such a linear guide may, e.g., guide the coupling element 59F itself or it may guide the drive shaft that will be attached to the coupling element 59A. In contrast to the example shown in Fig. 4, the deformable unit 50F of Fig. 7 does not linearly guide itself (in Fig. 4, the motion of the coupling element 59C is linearly guided by the further arm sections 53C and 54C) as the coupling element represents a free end of the deformable unit 50F - a further linear guide will thus be needed. The drive shaft will typically anyhow be guided by a guide provided by a housing of the device in which the drive unit comprising the deformable unit is utilized and thus a linear guide can be realized by such an element that is not part of the deformable unit or the drive unit.

Figs. 8A and 8B show the measured power consumption P in units of Watt of various example electric toothbrushes comprising different drive units as a function of applied load, where the load applied at a brush carrier of the brush head was either 0 Newton (N), 1 Newton, 2 Newton or 3 Newton, where Fig. 8A indicates the power consumption for a rotation frequency of 85Hz and Fig. 8B for a rotation frequency of 100 Hz.

Lines 1001 and 1011 indicate the power consumption for a drive unit essentially in accordance with the structure as shown in Fig. 3. Lines 1002 and 1012 indicate the power consumption of a toothbrush having a drive unit where an inclined wobble disk is connected with the motor shaft of a DC motor and where the disk is in frictional contact with two friction wheels that transfer the up and down motion of the inclined wobble disk to a drive shaft, which drive shaft is guided my springs to move along a linear axis. Lines 1003 and 1013 indicate the power consumption of a toothbrush having a drive unit where a gear wheel is attached to the motor shaft and the gear wheel meshes with a crown gear wheel that has an eccentric stem that is coupled with a drive shaft, where the drive shaft is guided by a spring arrangement to move along a linear axis. Lines 1004 and 1014 indicate the power consumption of a toothbrush having a drive unit where the motor shaft is extended by two eccentric shaft elements that are each connected with U-shape elements that are pivotably mounted and are each connected with a drive shaft to move the drive shaft up and down. Lines 1005 and 1015 indicate the power consumption for an existing toothbrush (Oral-B PRO 1 200) comprising a four-bar linkage gear unit to convert the rotation of the shaft of a DC motor into an oscillating rotation of a drive shaft around its longitudinal axis. Without now going into the details, it can be seen that lines 1001 and 1011 representing a drive unit in accordance with the present description show the lowest power consumption for the two different rotation frequencies and for the four different load conditions. It is believed that the low power consumption is related to the deformable unit being free from any meshed gears or frictionally coupled elements.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A drive unit (25A) for converting a rotational motion into a linear reciprocating motion, comprising:
a motor (30A) having a motor shaft (31A) for providing a rotational motion of the motor shaft (31A) around a longitudinal axis of the motor shaft (31A);
a motor shaft extension (40A) comprising at least a first eccentric shaft element (41A) that is arranged eccentrically with respect to the longitudinal axis of the motor shaft (31A);
at least one elastically deformable unit (50A) having a coupling element (59A) arranged for coupling with a driven element, preferably wherein the coupling element (59A) is coupled with or can be coupled with a drive shaft (70A);
wherein the first eccentric shaft element (41A) is coupled with the deformable unit (50A) to periodically deform the deformable unit (50A) so that a longitudinal position of the coupling element (59A) of the deformable unit (50A) periodically changes, preferably wherein the deformable unit (50A) is an integral, single unit; **characterized in that**
the deformable unit (50A) comprises a first arm section (51A) having a first end and a second end and a second arm section (52A) having a first end and a second end, wherein the second end of the first arm section (51A) and the first end of the second arm section (52A) are connected with each other, wherein the first end of the first arm section (51A) is connected with a mounting structure (60A) that is fixed relative to the motor (30A) and the second end of the second arm section (52A) is arranged above the first end of the first arm section (51A) in the direction of the longitudinal axis of the motor shaft (31A), preferably wherein the second end of the second arm section (52A) is connected with the coupling element (59A); and
**in that** the drive unit further comprises a linear guide (91E) and the second end of the second arm section (52A) is coupled with the linear guide (91E) so that the second end of the second arm section (52A) is essentially confined to a reciprocating linear motion in the direction of the longitudinal axis of the motor shaft (31A) when the deformable unit (50A) is periodically deformed.

2. The drive unit in accordance with claim 1, wherein the deformable unit (50A) further comprises a third arm section (53A) having a first end and a second end and a fourth arm section (54A) having a first end and a second end, wherein the second end of the third arm section (53A) and the first end of the fourth arm section (54A) are connected with each other, wherein the first end of the third arm section (53A) is coupled with the mounting structure and preferably wherein the second end of the fourth arm section (54A) and the second end of the second arm section (52A) are coupled with each other, preferably wherein the third arm section (53A) and the fourth arm section (54A) realize a linear guide for the second end of the second arm section (52A).

3. The drive unit in accordance with claim 1 or claim 2, wherein the deformable unit (50A) has a convex quadrilateral-type structure, preferably a rhomboidal structure, having four edges (51A, 52A, 53A, 54A) and four vertices (55A, 56A, 57A, 58A), preferably wherein at least one of a bottom vertex (55A) formed at the mounting structure (60A) and an opposite top vertex (58A) are extended vertices.

4. The drive unit in accordance with any one of claims 1 to 3, wherein the second end of the first arm section (51A) and the first end of the second arm section (52A) are connected by means of a hinge such as a living hinge.

5. The drive unit in accordance with any one of claims 1 to 3, wherein the second end of the first arm section (51A) and the first end of the second arm section (52A) are non-pivotably connected or connected in a non-hinged manner and the first arm section (51A) and the second arm section (52A) are each at least partially elastically deformable such as a leaf spring element.

6. The drive unit in accordance with one of claims 1 to 5, wherein the coupling element (59A) is arranged at a distal end of the deformable unit (50A) and the deformable unit (50A) is deformed in operation such that a length extension of the deformable unit (50A) periodically changes in a direction that coincides with or is parallel to the longitudinal axis (A) of the motor shaft (31A).

7. The drive unit in accordance with one of claims 1 to 6, comprising a first crossbeam (80A) extending along a first crossbeam axis that is perpendicular to the longitudinal axis (A), the first crossbeam (80A) having a first end coupled with the first eccentric shaft element (41A) so that only a motion of the first eccentric shaft element (41A) along the first crossbeam axis is transferred from the first eccentric shaft element (41A) to the first crossbeam (80A), and the first crossbeam (80A) has a second end that is affixed to the deformable unit (50A) such that a motion of the first crossbeam (80A) along the first crossbeam axis leads to a deformation of the deformable unit (50A), preferably wherein the first end of the first crossbeam (80A) is coupled to the first eccentric shaft element (41A) by means of an elongated hole (804B) provided in the first end of the first crossbeam (80A) and extending in a direction that is perpendicular to the first crossbeam axis and that is perpendicular to the longitudinal axis (A), the first eccentric shaft element (41A) extending through the elongated hole (804B).

8. The drive unit in accordance with claim 7, the motor shaft extension (40A) further comprising at least a second eccentric shaft element (42A) that is arranged eccentric with respect to the longitudinal axis (A) in a direction that is 180 degrees offset to the direction in which the first eccentric shaft element (41A) is arranged eccentric with respect to the longitudinal axis (A) and a second crossbeam (81A) extending along a second crossbeam axis that is perpendicular to the longitudinal axis (A), the second crossbeam (81A) having a first end coupled with the second eccentric shaft element (42A) so that only a motion of the second eccentric shaft element (42A) along the first crossbeam axis is transferred from the second eccentric shaft element (42A) to the second crossbeam (81A), and the second crossbeam (81A) has a second end that is affixed to the deformable unit (50A) such that a motion of the second crossbeam (81A) along the first crossbeam axis leads to a deformation of the deformable unit (50A) in alignment with the deformation caused by the first crossbeam (80A), preferably wherein the first end of the second crossbeam (81A) is coupled to the second eccentric shaft element (81A) by means of an elongated hole (814B) provided in the first end of the second crossbeam (81A) and extending in a direction that is perpendicular to the second crossbeam axis and that is perpendicular to the longitudinal axis (A), the second eccentric shaft element (42A) extending through the elongated hole (814B), further preferably wherein the first crossbeam (80A) and the second crossbeam (81A) have about the same mass.

9. The drive unit in accordance with one of claims 1 to 8, wherein the deformable unit (50A) is at least partly made from metal, preferably from sheet metal such as spring steel, in particular wherein the deformable unit (50A) is realized from bent sheet metal.

10. The drive unit in accordance with one of claims 1 to 9, wherein the deformable unit (50A) is at least partly made from plastic, preferably injection molded plastic.

11. The drive unit in accordance with one of claims 1 to 10, wherein the deformable unit (50A) is secured to or is integral with a frame structure (90E) that at least partly encircles the deformable unit (50A), preferably wherein the frame structure (90E) provides a linear guide (91E) for a drive shaft (70E) connected with the coupling element (109E).

12. A personal care device comprising a drive unit in accordance with any one of claims 1 to 11, preferably wherein the personal care device (1) is an electric toothbrush.

13. The personal care device in accordance with claim 12, wherein the personal care device (1) comprises a personal care head (21) realizing the driven element that is coupled with the deformable unit (50A) so that a deformation of the deformable unit (50A) causes a motion of the driven element.

## Patentansprüche

1. Antriebseinheit (25A) zum Umwandeln einer Drehbewegung in eine lineare Hin- und Herbewegung, umfassend:
einen Motor (30A), der eine Motorwelle (31A) zum Bereitstellen einer Drehbewegung der Motorwelle (31A) um eine Längsachse der Motorwelle (31A) herum aufweist;
eine Motorwellenverlängerung (40A), umfassend mindestens ein erstes Exzenterwellenelement (41A), das in Bezug auf die Längsachse der Motorwelle (31A) exzentrisch angeordnet ist;
mindestens eine elastisch verformbare Einheit (50A), die ein Kopplungselement (59A) aufweist, das zum Koppeln mit einem Antriebselement angeordnet ist, wobei vorzugsweise das Kopplungselement (59A) mit einer Antriebswelle (70A) gekoppelt ist oder mit dieser koppelbar ist;
wobei das erste Exzenterwellenelement (41A) mit der verformbaren Einheit (50A) gekoppelt ist, um die verformbare Einheit (50A) periodisch zu verformen, sodass sich eine Längsposition des Kopplungselements (59A) der verformbaren Einheit (50A) periodisch ändert, wobei vorzugsweise die verformbare Einheit (50A) eine integrale, einzelne Einheit ist;
**dadurch gekennzeichnet, dass** die verformbare Einheit (50A) einen ersten Armabschnitt (51A), der ein erstes Ende und ein zweites Ende aufweist, und einen zweiten Armabschnitt (52A) umfasst, der ein erstes Ende und ein zweites Ende aufweist, wobei das zweite Ende des ersten Armabschnitts (51A) und das erste Ende des zweiten Armabschnitts (52A) miteinander verbunden sind, wobei das erste Ende des ersten Armabschnitts (51A) mit einer Montagestruktur (60A) verbunden ist, die in Bezug auf den Motor (30A) befestigt ist, und das zweite Ende des zweiten Armabschnitts (52A) über dem ersten Ende des ersten Armabschnitts (51A) in der Richtung der Längsachse der Motorwelle (31A) angeordnet ist, wobei vorzugsweise das zweite Ende des zweiten Armabschnitts (52A) mit dem Kopplungselement (59A) verbunden ist; und **dadurch, dass** die Antriebseinheit ferner eine Linearführung (91E) umfasst und das zweite Ende des zweiten Armabschnitts (52A) mit der Linearführung (91E) gekoppelt ist, sodass das zweite Ende des zweiten Armabschnitts (52A) im Wesentlichen auf eine sich hin- und herbewegende lineare Bewegung in der Richtung der Längsachse der Motorwelle (31A) beschränkt ist, wenn die verformbare Einheit (50A) periodisch verformt ist.

2. Antriebseinheit nach Anspruch 1, wobei die verformbare Einheit (50A) ferner einen dritten Armabschnitt (53A), der ein erstes Ende und ein zweites Ende aufweist, und einen vierten Armabschnitt (54A) umfasst, der ein erstes Ende und ein zweites Ende aufweist, wobei das zweite Ende des dritten Armabschnitts (53A) und das erste Ende des vierten Armabschnitts (54A) miteinander verbunden sind, wobei das erste Ende des dritten Armabschnitts (53A) mit der Montagestruktur gekoppelt ist und wobei vorzugsweise das zweite Ende des vierten Armabschnitts (54A) und das zweite Ende des zweiten Armabschnitts (52A) miteinander gekoppelt sind, wobei vorzugsweise der dritte Armabschnitt (53A) und der vierte Armabschnitt (54A) eine Linearführung für das zweite Ende des zweiten Armabschnitts (52A) realisieren.

3. Antriebseinheit nach Anspruch 1 oder 2, wobei die verformbare Einheit (50A) eine konvexe viereckige Struktur, vorzugsweise eine rautenförmige Struktur, aufweist, die vier Kanten (51A, 52A, 53A, 54A) und vier Scheitelpunkte (55A, 56A, 57A, 58A) aufweist, wobei vorzugsweise mindestens einer von einem unteren Scheitelpunkt (55A), der an der Montagestruktur (60A) ausgebildet ist, und einem entgegengesetzten oberen Scheitelpunkt (58A) verlängerte Scheitelpunkte sind.

4. Antriebseinheit nach einem der Ansprüche 1 bis 3, wobei das zweite Ende des ersten Armabschnitts (51A) und das erste Ende des zweiten Armabschnitts (52A) mittels eines Scharniers, wie eines flexiblen Scharniers, verbunden sind.

5. Antriebseinheit nach einem der Ansprüche 1 bis 3, wobei das zweite Ende des ersten Armabschnitts (51A) und das erste Ende des zweiten Armabschnitts (52A) nicht schwenkbar verbunden oder in nicht gelenkiger Weise verbunden sind und der erste Armabschnitt (51A) und der zweite Armabschnitt (52A) jeweils mindestens teilweise elastisch verformbar sind, wie ein Blattfederelement.

6. Antriebseinheit nach einem der Ansprüche 1 bis 5, wobei das Kopplungselement (59A) an einem distalen Ende der verformbaren Einheit (50A) angeordnet ist und die verformbare Einheit (50A) in einem Betrieb derart verformt ist, dass sich eine Längenverlängerung der verformbaren Einheit (50A) in einer Richtung periodisch ändert, die mit der Längsachse (A) der Motorwelle (31A) zusammenfällt oder parallel zu dieser ist.

7. Antriebseinheit nach einem der Ansprüche 1 bis 6, umfassend einen ersten Querbalken (80A), der sich entlang einer ersten Querbalkenachse erstreckt, die senkrecht zu der Längsachse (A) ist, wobei der erste Querbalken (80A) ein erstes Ende aufweist, das mit dem ersten Exzenterwellenelement (41A) gekoppelt ist, sodass nur eine Bewegung des ersten Exzenterwellenelements (41A) entlang der ersten Querbalkenachse von dem ersten Exzenterwellenelement (41A) zu dem ersten Querbalken (80A) übertragen wird, und der erste Querbalken (80A) ein zweites Ende aufweist, das an der verformbaren Einheit (50A) derart angebracht ist, dass eine Bewegung des ersten Querbalkens (80A) entlang der ersten Querbalkenachse zu einer Verformung der verformbaren Einheit (50A) führt, wobei vorzugsweise das erste Ende des ersten Querbalkens (80A) mit dem ersten Exzenterwellenelement (41A) mittels eines länglichen Lochs (804B) gekoppelt ist, das in dem ersten Ende des ersten Querbalkens (80A) bereitgestellt ist und sich in einer Richtung erstreckt, die zu der ersten Querbalkenachse senkrecht ist und zu der Längsachse (A) senkrecht ist, wobei sich das erste Exzenterwellenelement (41A) durch das längliche Loch (804B) erstreckt.

8. Antriebseinheit nach Anspruch 7, die Motorwellenverlängerung (40A) ferner umfassend mindestens ein zweites Exzenterwellenelement (42A), das in Bezug auf die Längsachse (A) in einer Richtung exzentrisch angeordnet ist, die 180 Grad versetzt zu der Richtung ist, in der das erste Exzenterwellenelement (41A) in Bezug auf die Längsachse (A) exzentrisch angeordnet ist, und einen zweiten Querbalken (81A), der sich entlang einer zweiten Querbalkenachse erstreckt, die zu der Längsachse (A) senkrecht ist, wobei der zweite Querbalken (81A) ein erstes Ende aufweist, das mit dem zweiten Exzenterwellenelement (42A) gekoppelt ist, sodass nur eine Bewegung des zweiten Exzenterwellenelements (42A) entlang der ersten Querbalkenachse von dem zweiten Exzenterwellenelement (42A) zu dem zweiten Querbalken (81A) übertragen wird, und der zweite Querbalken (81A) ein zweites Ende aufweist, das an der verformbaren Einheit (50A) derart angebracht ist, dass eine Bewegung des zweiten Querbalkens (81A) entlang der ersten Querbalkenachse zu einer Verformung der verformbaren Einheit (50A) in Ausrichtung mit der Verformung führt, die durch den ersten Querbalken (80A) verursacht wird, wobei vorzugsweise das erste Ende des zweiten Querbalkens (81A) mit dem zweiten Exzenterwellenelement (81A) mittels eines länglichen Lochs (814B) gekoppelt ist, das in dem ersten Ende des zweiten Querbalkens (81A) bereitgestellt ist und sich in einer Richtung erstreckt, die zu der zweiten Querbalkenachse senkrecht ist und zu der Längsachse (A) senkrecht ist, wobei sich das zweite Exzenterwellenelement (42A) durch das längliche Loch (814B) erstreckt, wobei ferner vorzugsweise der erste Querbalken (80A) und der zweite Querbalken (81A) etwa die gleiche Masse aufweisen.

9. Antriebseinheit nach einem der Ansprüche 1 bis 8, wobei die verformbare Einheit (50A) mindestens teilweise aus Metall, vorzugsweise aus Blech wie Federstahl, hergestellt ist, insbesondere wobei die verformbare Einheit (50A) aus gebogenem Blech realisiert ist.

10. Antriebseinheit nach einem der Ansprüche 1 bis 9, wobei die verformbare Einheit (50A) mindestens teilweise aus Kunststoff, vorzugsweise spritzgegossenem Kunststoff, hergestellt ist.

11. Antriebseinheit nach einem der Ansprüche 1 bis 10, wobei die verformbare Einheit (50A) an einer Rahmenstruktur (90E) gesichert ist oder einstückig mit dieser ist, die die verformbare Einheit (50A) mindestens teilweise umgibt, wobei vorzugsweise die Rahmenstruktur (90E) eine Linearführung (91E) für eine Antriebswelle (70E) bereitstellt, die mit dem Kopplungselement (109E) verbunden ist.

12. Körperpflegevorrichtung, umfassend eine Antriebseinheit nach einem der Ansprüche 1 bis 11, wobei vorzugsweise die Körperpflegevorrichtung (1) eine elektrische Zahnbürste ist.

13. Körperpflegevorrichtung nach Anspruch 12, wobei die Körperpflegevorrichtung (1) einen Körperpflegekopf (21) umfasst, der das Antriebselement realisiert, das mit der verformbaren Einheit (50A) gekoppelt ist, sodass eine Verformung der verformbaren Einheit (50A) eine Bewegung des Antriebselements bewirkt.

## Revendications

1. Unité d'entraînement (25A) permettant de convertir un mouvement de rotation en un mouvement alternatif linéaire, comprenant :
un moteur (30A) ayant un arbre de moteur (31A) permettant de fournir un mouvement de rotation de l'arbre de moteur (31A) autour d'un axe longitudinal de l'arbre de moteur (31A) ;
une extension d'arbre de moteur (40A) comprenant au moins un premier élément d'arbre excentrique (41A) qui est agencé de manière excentrique par rapport à l'axe longitudinal de l'arbre de moteur (31A) ;
au moins une unité élastiquement déformable (50A) ayant un élément d'accouplement (59A) agencé pour s'accoupler avec un élément entraîné, de préférence, dans laquelle l'élément d'accouplement (59A) est accouplé à ou peut être accouplé à un arbre d'entraînement (70A) ;
dans laquelle le premier élément d'arbre excentrique (41A) est accouplé à l'unité déformable (50A) pour déformer périodiquement l'unité déformable (50A) de sorte qu'une position longitudinale de l'élément d'accouplement (59A) de l'unité déformable (50A) change périodiquement, de préférence, dans laquelle l'unité déformable (50A) est une seule unité solidaire ; **caractérisée en ce que** l'unité déformable (50A) comprend une première section de bras (51A) ayant une première extrémité et une seconde extrémité et une deuxième section de bras (52A) ayant une première extrémité et une seconde extrémité, dans laquelle la seconde extrémité de la première section de bras (51A) et la première extrémité de la deuxième section de bras (52A) sont reliées l'une à l'autre, dans laquelle la première extrémité de la première section de bras (51A) est reliée à une structure de montage (60A) qui est fixe par rapport au moteur (30A) et la seconde extrémité de la deuxième section de bras (52A) est agencée au-dessus de la première extrémité de la première section de bras (51A) dans la direction de l'axe longitudinal de l'arbre de moteur (31A), de préférence, dans laquelle la seconde extrémité de la deuxième section de bras (52A) est reliée à l'élément d'accouplement (59A) ;
et **en ce que** l'unité d'entraînement comprend en outre un guide linéaire (91E) et la seconde extrémité de la deuxième section de bras (52A) est accouplée au guide linéaire (91E) de sorte que la seconde extrémité de la deuxième section de bras (52A) est essentiellement confinée à un mouvement linéaire alternatif dans la direction de l'axe longitudinal de l'arbre de moteur (31A) lorsque l'unité déformable (50A) est déformée périodiquement.

2. Unité d'entraînement selon la revendication 1, dans laquelle l'unité déformable (50A) comprend en outre une troisième section de bras (53A) ayant une première extrémité et une seconde extrémité et une quatrième section de bras (54A) ayant une première extrémité et une seconde extrémité, dans laquelle la seconde extrémité de la troisième section de bras (53A) et la première extrémité de la quatrième section de bras (54A) sont reliées l'une à l'autre, dans laquelle la première extrémité de la troisième section de bras (53A) est accouplée à la structure de montage et, de préférence, dans laquelle la seconde extrémité de la quatrième section de bras (54A) et la seconde extrémité de la deuxième section de bras (52A) sont accouplées l'une à l'autre, de préférence, dans laquelle la troisième section de bras (53A) et la quatrième section de bras (54A) réalisent un guide linéaire pour la seconde extrémité de la deuxième section de bras (52A).

3. Unité d'entraînement selon la revendication 1 ou la revendication 2, dans laquelle l'unité déformable (50A) a une structure de type quadrilatère convexe, de préférence, une structure rhomboïdale, ayant quatre bords (51A, 52A, 53A, 54A) et quatre sommets (55A, 56A, 57A, 58A), de préférence, dans laquelle au moins l'un parmi un sommet inférieur (55A) formé au niveau de la structure de montage (60A) et un sommet supérieur opposé (58A) sont des sommets étendus.

4. Unité d'entraînement selon l'une quelconque des revendications 1 à 3, dans laquelle la seconde extrémité de la première section de bras (51A) et la première extrémité de la deuxième section de bras (52A) sont reliées au moyen d'une charnière telle qu'une charnière mobile.

5. Unité d'entraînement selon l'une quelconque des revendications 1 à 3, dans laquelle la seconde extrémité de la première section de bras (51A) et la première extrémité de la deuxième section de bras (52A) sont reliées de manière non pivotante ou reliées de manière non articulée et la première section de bras (51A) et la deuxième section de bras (52A) sont chacune au moins partiellement déformables élastiquement comme un élément de ressort à lames.

6. Unité d'entraînement selon l'une des revendications 1 à 5, dans laquelle l'élément d'accouplement (59A) est agencé au niveau d'une extrémité distale de l'unité déformable (50A) et l'unité déformable (50A) est déformée en fonctionnement de telle sorte qu'une extension en longueur de l'unité déformable (50A) change périodiquement dans une direction qui coïncide avec ou est parallèle à l'axe longitudinal (A) de l'arbre de moteur (31A).

7. Unité d'entraînement selon l'une des revendications 1 à 6, comprenant une première traverse (80A) s'étendant le long d'un premier axe de traverse qui est perpendiculaire à l'axe longitudinal (A), la première traverse (80A) ayant une première extrémité accouplée au premier élément d'arbre excentrique (41A) de sorte qu'un mouvement du premier élément d'arbre excentrique (41A) le long du premier axe de traverse est transféré du premier élément d'arbre excentrique (41A) à la première traverse (80A), et la première traverse (80A) a une seconde extrémité qui est fixée à l'unité déformable (50A) de telle sorte qu'un mouvement de la première traverse (80A) le long du premier axe de traverse cause une déformation de l'unité déformable (50A), de préférence, dans laquelle la première extrémité de la première traverse (80A) est accouplée au premier élément d'arbre excentrique (41A) au moyen d'un trou allongé (804B) prévu dans la première extrémité de la première traverse (80A) et s'étendant dans une direction qui est perpendiculaire au premier axe de traverse et qui est perpendiculaire à l'axe longitudinal (A), le premier élément d'arbre excentrique (41A) s'étendant à travers le trou allongé (804B).

8. Unité d'entraînement selon la revendication 7, l'extension d'arbre de moteur (40A) comprenant en outre au moins un second élément d'arbre excentrique (42A) qui est agencé de manière excentrique par rapport à l'axe longitudinal (A) dans une direction qui est décalée de 180 degrés par rapport à la direction dans laquelle le premier élément d'arbre excentrique (41A) est agencé de manière excentrique par rapport à l'axe longitudinal (A) et une seconde traverse (81A) s'étendant le long d'un second axe de traverse qui est perpendiculaire à l'axe longitudinal (A), la seconde traverse (81A) ayant une première extrémité accouplée au second élément d'arbre excentrique (42A) de sorte que seulement un mouvement du second élément d'arbre excentrique (42A) le long du premier axe de traverse est transféré du second élément d'arbre excentrique (42A) à la seconde traverse (81A), et la seconde traverse (81A) a une seconde extrémité qui est fixée à l'unité déformable (50A) de telle sorte qu'un mouvement de la seconde traverse (81A) le long du premier axe de traverse cause une déformation de l'unité déformable (50A) alignée sur la déformation provoquée par la première traverse (80A), de préférence, dans laquelle la première extrémité de la seconde traverse (81A) est accouplée au second élément d'arbre excentrique (81A) au moyen d'un trou allongé (814B) prévu dans la première extrémité de la seconde traverse (81A) et s'étendant dans une direction qui est perpendiculaire au second axe de traverse et qui est perpendiculaire à l'axe longitudinal (A), le second élément d'arbre excentrique (42A) s'étendant à travers le trou allongé (814A), de préférence encore, dans laquelle la première traverse (80A) et la seconde traverse (81A) ont environ la même masse.

9. Unité d'entraînement selon l'une des revendications 1 à 8, dans laquelle l'unité déformable (50A) est au moins en partie réalisée en métal, de préférence ; en tôle telle que l'acier à ressorts, en particulier, dans laquelle l'unité déformable (50A) est réalisée à partir de tôle pliée.

10. Unité d'entraînement selon l'une des revendications 1 à 9, dans laquelle l'unité déformable (50A) est au moins partiellement réalisée en plastique, de préférence, en plastique moulé par injection.

11. Unité d'entraînement selon l'une des revendications 1 à 10, dans laquelle l'unité déformable (50A) est attachée à ou est solidaire d'une structure de cadre (90E) qui entoure au moins partiellement l'unité déformable (50A), de préférence, dans laquelle la structure de cadre (90E) fournit un guide linéaire (91E) pour un arbre d'entraînement (70E) relié à l'élément d'accouplement (109E).

12. Dispositif de soins personnels comprenant une unité d'entraînement selon l'une quelconque des revendications 1 à 11, de préférence, dans lequel le dispositif de soins personnels (1) est une brosse à dents électrique.

13. Dispositif de soins personnels selon la revendication 12, dans lequel le dispositif de soins personnels (1) comprend une tête de soins personnels (21) réalisant l'élément entraîné qui est accouplé à l'unité déformable (50A) de sorte qu'une déformation de l'unité déformable (50A) provoque un mouvement de l'élément entraîné.
